# EUROPÄISCHE PATENTANMELDUNG

(11) **EP 0 859 023 A2**
(43) Veröffentlichungstag der Anmeldung: **19.08.1998**
(21) Anmeldenummer: 98100660.4
(22) Anmeldetag: 16.01.1998
(51) Int. Cl.: C08G 73/10

(54) **Mischungen aus Lösungen von Polyamidocarbonsäuren und Lösungen von polyimidbildenden Ausgangsstoffen**

(30) Priorität: 15.02.1997 DE 19705882
(71) Anmelder: Dr.Beck & Co. Aktiengesellschaft, 20539 Hamburg (DE)
(72) Erfinder: Lienert, Klaus-Wilhelm, Dr., 22763 Hamburg (DE); Blum, Rainer, 67069 Ludwigshafen (DE); Schmidt, Gerold, 22145 Hamburg (DE)
(74) Vertreter: Kluth, Bernhard

(57) **Zusammenfassung**

Die Erfindung betrifft Mischungen aus bevorzugt 80 bis 99,9 Gew.-%, bezogen auf die Mischung, einer Lösung L1, enthaltend eine oder mehrere Polyamidocarbonsäuren, und aus bevorzugt 0,1 bis 20 Gew.-%, bezogen auf die Mischung, einer Lösung L2, enthaltend ein oder mehrere, bevorzugt primäre, Diamine und ein oder mehrere Tetracarbonsäurediester, Verfahren zur Herstellung von Überzügen aus Polyimid mit solchen Mischungen, die Verwendung solcher Mischungen zur Herstellung von Überzügen aus Polyimid, sowie mit Polyimid beschichtete Gegenstände, erhältlich unter Verwendung solcher Mischungen.

## Beschreibung

### Gebiet der Erfindung

Die vorliegende Erfindung betrifft Mischungen aus Lösungen L1 von Polyamidocarbonsäuren und Lösungen L2 von Diaminen und Tetracarbonsäurediestern als polyimidbildende Ausgangsstoffe, die Verwendung solcher Mischungen zur Herstellung von Überzügen sowie mit Polyimid beschichtete Gegenstände, erhältlich unter Verwendung solcher Mischungen.

### Stand der Technik

Polyimide sind Polymere, die Filme mit hervorragenden chemischen, physikalischen und elektrischen Eigenschaften bilden.
Die heute üblicherweise zur Verfügung stehenden Polyimide stellen im allgemeinen Lösungen der Polyimidvorläufer in geeigneten Lösemitteln dar. Nach dem Lackieren werden die Lacke getrocknet und gehärtet. Dabei bilden sich die unlöslichen Imidstrukturen. Dabei sind unterschiedliche Polyimidvorstufen bekannt. Üblicherweise werden, durch die Reaktion von geeigneten primären Diaminen mit Tetracarbonsäuredianhydriden, Polyamidocarbonsäuren hergestellt, wie beispielsweise in GB-PS 898 651, US-PS 3,207,728 oder US-PS 3,234,181 beschrieben. Solche Polyamidocarbonsäuren sind in geeigneten Lösemitteln, z.B. N-Methylpyrrolidon, löslich. Nach dem Lackieren werden die Lacke getrocknet und gehärtet. Dabei bilden sich die unlöslichen Imidstrukturen durch Wasserabspaltung aus. Die so erzeugten Polyimide weisen, wenn sie z.B. aus 4,4'-Diaminodiphenyloxid und Pyromellithsäuredianhydrid hergestellt sind, Glasübergangstemperaturen von über 400°C und Zersetzungstemperaturen von etwa 580°C auf. Die Polyamidocarbonsäuren sind in bestimmten Lösemitteln, z.B. N-Methylpyrolidon, löslich, haben aber, bedingt durch den molekularen Aufbau, eine hohe Viskosität und einen vergleichsweise niedrigen Feststoffgehalt. Sie sind bei Raumtemperatur nicht lagerstabil und müssen bei niedrigen Temperaturen, z.B. 0 bis 5°C, gelagert werden. Für einige Anwendungen, z.B. Planarisierung in der Chipherstellung, ist ihr niedriger Feststoffgehalt nicht optimal.
Einen höheren Feststoffgehalt erlauben Formulierungen, in denen Polyamidocarbonsäuredialkylester eingesetzt werden. Diese Formulierungen sind beispielsweise in EP-A-0 209 670 beschrieben und haben eine verbesserte Lagerstabilität und Planarisierung, wobei sie sich aber nur aufwendig herstellen lassen.

Vom Festkörper-Viskositätsverhältnis günstigere Polyimidvorstufen sind Lösungen, hergestellt aus Diaminen und Tetracarbonsäurediestern, wie beispielsweise in DE-A- 41 35 056 und DE 41 35 058 beschrieben. Die Lösungen sind bei Raumtemperatur lagerstabil. Nach entsprechender Applikation und Hartung der Lösungen werden Polyimidfilme erhalten. Diese Lösungen haben, bei Feststoffgehalten von 50 Gew.-% und höher, Viskositäten, die denjenigen der handelsüblichen Polyamidocarbonsäurelösungen entsprechen. Bei der Hartung werden die Veresterungsalkohole und Wasser abgespalten. Abhängig von den verwendeten Einsatzstoffen werden nach dem Härten Polyimide erhalten, die Glasübergangstemperaturen um die 300°C und Zersetzungstemperaturen um die 520°C haben. Die schlechteren thermischen Eigenschaften haben ihre Ursache in der durch die Härtung entstehenden nicht perfekten Polyimidstrukturen.

### Aufgabe und Lösung

Die der vorliegenden Erfindung zugrundeliegende Aufgabe besteht somit darin, lagerstabile Lösungen von polyimidischen Vorläufern herzustellen, die ein günstigeres Feststoff-Viskositäts-Verhältnis als die Lösungen von Polyamidocarbonsäuren haben. Außerdem sollten die daraus erzeugten Polyimide bessere thermische Eigenschaften als die Polyimide, die aus den reinen Lösungen aus Diaminen und Tetracarbonsäurediestern hergestellt werden, aufweisen.

Überraschenderweise wurde gefunden, daß Mischungen von Lösungen L1, enthaltend ein oder mehrere Polyamidocarbonsäuren, mit Lösungen L2, enthaltend ein oder mehrere Diamine und ein oder mehrere Tetracarbonsäurediester, Lacke ergeben, deren Viskosität niedriger ist als die Viskosität der jeweiligen Ausgangslösungen L1 und L2. Dabei fällt die Viskosität innerhalb eines bestimmten Zeitraumes auf ein Minimum ab um danach konstant zu bleiben. Somit wird es möglich, Lösungen von Polyamidocarbonsäuren mit einem höheren Festkörper als die üblichen Produkte des Standes der Technik herzustellen, die gleichermaßen gut verarbeitbar sind.

In einer bevorzugten Ausführungsform der Erfindung ist die Mischung aus 0,1 bis 20 Gew.-%, besonders bevorzugt aus 1 bis 10 Gew.-%, der Lösung L2, enthaltend Diamin und Tetracarbonsäurediester, und aus 80 bis 99,9 Gew.-%, besonders bevorzugt aus 90 bis 99 Gew.-%, der Lösung L1, enthaltend Polyamidocarbonsäure, zusammensgesetzt.

In weiteren bevorzugten Ausführungsformen der Erfindung sind die Polyamidocarbonsäuren in der Lösung L1 aus primären Diaminen und Tetracarbonsäureanhydriden hergestellt,
lassen sich mindestens 2 Mol-%, bezogen auf alle Estergruppen, der Estergruppen der Tetracarbonsäurediester in der Lösung L2 von Alkoholen der allgemeinen Formel

HO-Z-O-X (I)

oder

HO-Z-X (II)

herleiten, worin Z für einen geradlinigen oder verzweigten aliphatischen Rest mit 1 bis 15, bevorzugt 1 bis 8, Kohlenstoffatomen, welcher durch 1 bis 4, bevorzugt 1 bis 2 Ethergruppen -O- unterbrochen sein kann und X für einen aromatischen Rest aus 5 bis 20 Kohlenstoffatomen, welcher auch N, O oder S als Heteroatome im aromatischen Ringsystem enthalten kann, steht,
und stellen die Tetracarbonsäurediester ein Gemisch aus 0,05 bis 0,95 Mol-% Oxydiphthalsäurediester und aus 0,05 bis 0,95 Mol-% Benzophenontetracarbonsäurediester und/oder Biphenyltetracarbonsäurediester dar.

### Durchführung der Erfindung

Die Lösungen L2 enthalten Tetracarbonsäurediester und Diamine als Ausgangsstoffe für Polyimide.
Als Tetracarbonsäurediester kommen insbesondere solche in Betracht, die sich von aromatischen oder teilaromatischen Tetracarbonsäureanhydriden mit mindestens einem aromatischen Ring ableiten Es kann sich dabei um Tetracarbonsäurediester mit einem aromatischen Ring, mit kondensierten aromatischen Ringsystemen oder mit aromatischen Ringen, die beispielsweise durch eine Einfachbindung, eine Ether-, Sulfonyl-, Carbonylgruppe oder aliphatische Kohlenstoffreste, insbesondere mit 1 bis 8 Kohlenstoffatomen und gegebenenfalls mit Heteroatomen, wie Sauerstoff, Schwefel oder Stickstoff, verbunden sind, handeln. Die aromatischen Ringe bzw. Ringsysteme können als Substituenten insbesondere C1- bis C6-Alkyl- oder -Alkoxygruppen oder Halogenatome tragen.
Beispielhaft werden für die Tetracarbonsäureanhydride die in der Beschreibung der DE-A-41 35 056 genannten Tetracarbonsäureanhydride genannt, wobei bevorzugt Gemische aus Tetracarbonsäurediestern eingesetzt werden, die sich von Oxidiphthalsäuredianhydriden, Benzophenontetracarbonsäuredianhydriden und Biphenyltetracarbonsäuredianhydriden ableiten.
Besonders bevorzugt werden als Tetracarbonsäurediester Mischungen aus 0,05 bis 0,95 Mol-%, vorzugsweise 0,2 bis 0,8 Mol-%, Oxydiphthalsäurediester und 0,05 bis 0,95 Mol-%, vorzugsweise 0,2 bis 0,8 Mol-%, Benzophenontetracarbonsäurediester und/oder Biphenyltetracarbonsäurediester eingesetzt, wobei sich die Mol-% auf die Gesamtmenge an Tetracarbonsäurediester beziehen.
Die Estergruppen in den Tetracarbonsäurediestern leiten sich beispielsweise aus C1- bis C8-Alkoholen ab, bevorzugt jedoch zu mindestens 2 Mol-%, bezogen auf alle Estergruppen von Alkoholen der allgemeinen Formel

HO-Z-O-X (I)

oder

HO-Z-X (II)

ab, worin Z für einen geradlinigen oder verzweigten aliphatischen Rest mit 1 bis 15, bevorzugt 1 bis 8, Kohlenstoffatomen, welcher durch 1 bis 4, bevorzugt 1 bis 2 Ethergruppen -O- unterbrochen sein kann und X für einen aromatischen Rest aus 5 bis 20 Kohlenstoffatomen, welcher auch N, O oder S als Heteroatome im aromatischen Ringsystem enthalten kann, steht. Ganz besonders bevorzugt steht X für einen Phenylring und Z für einen C1- bis C6-Alkylrest.
Als Alkohole der Formel I zu nennen sind vorzugsweise Monophenoxyethylenglykol oder Monophenoxypropylenglykol.
Als Alkohole der Formel II zu nennen sind vorzugsweise Benzylalkohol, 1-Hydroxy-2-Phenylethan und 1-Hydroxy-3-Phenylpropan.
Desweiteren können in untergeordneten Mengen auch polyfunktionelle Alkohole eingesetzt werden.
Bevorzugt leiten sich mindestens 10 Mol-%, besonders bevorzugt mindestens 30 Mol-% der Estergruppen in den Diestern von den Alkoholen der Formeln I oder II ab. Ganz besonders bevorzugt leiten sich alle Estergruppen in den Diestern von Alkoholen der Formeln I oder II ab. Die Herstellung der Tetracarbonsäurediester ist beispielsweise in DE-A-41 35 058 beschrieben.

Als Diamine kommen inbesondere aromatische oder teilaromatische Diamine, welche mindestens einen aromatischen Ring enthalten, in Betracht. Bevorzugt weisen die Diamine primäre Aminogruppen auf. Es kann sich dabei um Diamine mit einem aromatischen Ring, mit kondensierten aromatischen Ringsystemen oder aromatischen Ringen, die beispielsweise durch eine Einfachbindung, eine Ether-, Carbonyl-, Sulfonylgruppe oder aliphatische Kohlenwasserstoffreste, insbesondere mit 1 bis 8 Kohlenstoffatomen und gegebenenfalls auch Heteroatomen, wie Schwefel, Stickstoff oder Sauerstoff, verbunden sind, handeln. Die aromatischen Ringe bzw. Ringsysteme können als Substituenten insbesondere C1- bis C6-Alkyl- oder -Alkoxygruppen oder Halogenatome tragen.
Beispielhaft seien die in DE-A-41 35 058 angeführten Diamine genannt, wobei bevorzugt Diaminodiphenylmethan, Diaminodiphenyloxid, Diaminodiphenylsulfid, Diaminodiphenylsulfon oder 2,2-Bis(4-(4-aminophenoxy)phenyl)propan oder deren Gemische eingesetzt werden.

Als Lösemittel für die Herstellung der Lösungen L2, enthaltend die Tetracarbonsäurediester und die Diamine, eignen sich beispielsweise polare organische Lösemittel, wie aliphatische oder aromatische Alkohole, Ether, Ketone, Aldehyde oder Ester. Weiterhin können bis zu 10 Gew.-%, bezogen auf die Mischung aus L1 und L2, unpolare Lösemittel als Verschnittmittel, wie beispielsweise Xylol oder Solventnaphtha®, in den Lösungen L2 enthalten sein.
Bevorzugt werden hochpolare Lösemittel, wie N-Methylpyrrolidon, Formamid, Dimethylformamid, Alkylalkylendiharnstoffe wie Dimethylethylendiharnstoff oder Dimethylpropylendiharnstoff, Dimethylsulfoxid, Butyrolacton, Pyrrolidon, Dialkylacetamid aber auch Glykole, Glykolester und Glykolether verwendet. Als Lösemittel empfiehlt sich auch naheliegenderweise der bei der Herstellung der Tetracarbonsäurediester üblicherweise im Überschuß eingesetzte Alkohol.
Die Wahl des Lösemittels hängt im wesentlichen von der Löslichkeit bzw. der Polarität der Tetracarbonsäurediester und der Diamine ab. Vorzugsweise enthalten die Lösungen L2 die Tetracarbonsäurediester und die Diamine im Molverhältnis von 1,5:1 bis 1:1,5, besonders bevorzugt im Molverhältnis von 1:1.
Der Feststoffgehalt der Lösungen L2 beträgt vorzugsweise zwischen 30 und 60 Gew.-%. Zur Herstellung der Lösungen L2 können Tetracarbonsäurediester, Diamin und Lösemittel in beliebiger Reihenfolge zusammengegeben werden.
Beispielsweise ist es möglich, zunächst den Tetracarbonsäurediester durch Umsetzung eines Tetracarbonsäureanhydrids mit einem Überschuß an Alkohol herzustellen und zum erhaltenen Gemisch das Diamin und gegebenenfalls weiteres Lösemittel zu geben. Um alle Komponenten in Lösung zu bringen wird, falls erforderlich, bei Raumtemperatur oder auch erhöhter Temperatur, z.B. zwischen 30 und 120^{o}C, gerührt.
Die Lösungen L2 können übliche Zusatzstoffe, wie Katalysatoren für die Imidbildung, Farbstoffe, Pigmente, Füllstoffe, Verlaufsmittel und viskositätsregulierende Stoffe enthalten.

Die Lösungen L1 enthalten Polyamidocarbonsäuren, wie sie beispielsweise in GB-PS 898,651, US-PS 3,207,728 oder US-PS 3,234,181 beschrieben sind.
Bevorzugt werden die Polyamidocarbonsäuren aus Diaminen und Tetracarbonsäuredianhydriden gebildet.
Bevorzugte Diamine sind die oben schon angeführten aromatischen oder teilaromatischen Diamine, welche mindestens einen aromatischen Ring enthalten.
Bevorzugte Tetracarbonsäureanhydride sind Pyromellithsäuredianhydrid, 2,3,6,7-Naphthalintetracarbonsäuredianhydrid, 3,3',4,4'-Diphenyltetracarbonsäuredianhydrid, 1,2,5,6-Naphthalintetracarbonsäuredianhydrid, 2,2',3,3'-Diphenyltetracarbonsäuredianhydrid, 2,2-Bis-(3,4-Dicarboxyphenyl)propandianhydrid, 3,4,9,10-Perylentetracarbonsäuredianhydrid, Bis-(3,4-Dicaboxyphenyl)etherdianhydrid oder Ethylentetracarbonsäuredianydrid. Weiterhin bevorzugt sind die in DE-A-41 35 056 genannten Tetracarbonsäuredianhydride.
Die Herstellung der Polyamidocarbonsäure erfolgt vorzugsweise in Lösemitteln, die gegenüber den Diaminen und den Tetracarbonsäuredianhydriden inert sind und die ein Lösemittel für die entstehende Polyamidocarbonsäure sind und somit mit dieser die Lösungen L1 bilden.
Die Lösungen L1 können ebenfalls die üblichen Zusatzstoffe, wie Katalysatoren für die Imidbildung, Farbstoffe, Pigmente, Füllstoffe, Verlaufsmittel und viskositätsregulierende Stoffe enthalten.

Besonders bevorzugt werden für die Lösungen L1 und L2 dieselben Lösemittel, wie sie schon oben beschrieben sind, eingesetzt.

Die erfindungsgemäßen Mischungen werden durch Mischen der Lösungen L1 und L2 hergestellt. Bevorzugt wird die Lösung L1 vorgelegt und die für die Einstellung des gewünschten Mischungverhältnisses benötigte Menge an Lösung L2 entweder vollständig oder in Portionen, unter Rühren und gegebenenfalls unter Erwärmen, hinzugegeben.
Die Mischungverhältnisse L1:L2 sind im allgemeinen frei wählbar. In einer bevorzugten Ausführungsform der Erfindung ist die Mischung aus 0,1 bis 20 Gew.-%, besonders bevorzugt aus 1 bis 10 Gew.-%, der Lösung L2 aus Diamin und Tetracarbonsäurediester und aus 80 bis 99,9 Gew.-%, besonders bevorzugt aus 90 bis 99 Gew.-%, der Lösung L1 der Polyamidocarbonsäure zusammensgesetzt.
Es ist hervorzuheben, daß schon geringe Zusätze der Lösung L2 zur Lösung L1, die ursprüngliche Viskosität der Lösung L1 deutlich reduzieren. Mischungen von Lösungen L1, enthaltend Polyamidocarbonsäuren, mit Lösungen L2, enthaltend Diamine und Tetracarbonsäurediester, ergeben Lacke, deren Viskosität niedriger ist als die Viskosität der Ausgangslösungen L1 und L2. Dabei fällt die Viskosität nach dem Mischen innerhalb eines bestimmten Zeitraumes auf ein Minimum ab um danach konstant zu bleiben. Somit wird es möglich, Lösungen von Polyamidocarbonsäuren mit einem höheren Festkörper als die üblichen Produkte des Standes der Technik herzustellen, die gleichermaßen gut verarbeitbar sind. Außerdem wurde gefunden daß die Abmischungen der Polyamidocarbonsäurelösung L1 mit geringen Mengen der Lösung L2 zu bei Raumtemperatur lagerstabilen Lacken führt.

Die erfindungsgemäßen Mischungen eignen sich als Beschichtungsmittel zur Herstellung von Überzügen aus Polyimid auf unterschiedlichsten Substraten, wie beispielsweise Metall, Glas oder Silizium. Die Härtung der Beschichtung erfolgt vorzugsweise bei Endtemperaturen zwischen 150 und 450°C, besonders bevorzugt zwischen 300 und 400°C. Es hat sich als besonders vorteilhaft erwiesen, den Härtungsprozeß mehrstufig durch stufenweises Erhöhen der Temperatur bis zur Endtemperatur durchzuführen.
Die resultierenden Polyimid-Beschichtungen weisen eine höhere Thermostabilität hinsichtlich Glasübergangstemperatur und Zersetzungstemperatur als Beschichtungen auf, die ausschließlich mit Lösungen L2 hergestellt wurden, wie beispielsweise in DE-A 41 35 056 und DE-A 41 35 058 beschrieben.
Mit den erfindungsgemäßen Lösungen können auch in großen Schichtdicken blasenfreie planare Beschichtungen hergestellt werden.

Die im folgenden aufgeführten Beispiele sollen die Erfindung anschaulich darstellen, ohne sie auf diese Beispiele einzuschränken.

### Beispiele

### Beispiel 1: Herstellung der Polyamidocarbonsäurelösung L1

Die Polyamidocarbonsäure wird nach der in der GB-PS 898,651 beschriebenen Methode aus 40.00 Teilen 4,4'-Diaminodiphenyloxid und 43.00 Teilen Pyromellithsäuredianhydrid in N-Methylpyrrolidon hergestellt.
Die 16%-ige Lösung L1 der Polyamidocarbonsäure in N-Methylpyrrolidon hat eine Viskosität von 8200 mPas bei 25°C.

### Beispiel 2: Herstellung der Lösung L2, enthaltend das Diamin und den Tetracarbonsäurediester

Die Lösung L2 wird nach der in der DE 41 35 058 beschriebenen Methode hergestellt in folgenden Schritten hergestellt:
1.) Umsetzung des Tetracarbonsäureanhydrids mit Alkohol bei 100°C während 30 Minuten im Gegenwart von Dimethylaminopyridin als Katalysator und einer ersten Teilmenge an N-Methylpyrrolidon zum Tetracarbonsäurediester.
2.) Nach Abkühlen auf 60°C Zugabe des Diamins sowie weiteres Lösemittel N-Methylpyrrolidon und Rühren bis die Lösung L2 entstanden ist

Die eingesetzten Mengen sind:
- 27.92 Teile: Oxidiphthalsäuredianhydrid
- 3.23 Teile: Benzophenontetracarbonsäuredianhydrid
- 1.53 Teile: Monophenoxyethylenglykol
- 5.44 Teile: Methanol
- 0.36 Teile: Wasser
- 27.39 Teile: N-Methylpyrrolidon
- 0.25 Teile: Dimethylaminopyridin
- 41.02 Teile: 2,2-Bis[-(4-aminophenoxy)phenyl]propan
- 30.00 Teile: N-Methylpyrrolidon

Die 59%-ige Lösung L2 hat bei 25°C eine Viskosität von 9 400 mPas.

### Beispiel 3: Herstellung der erfindungsgemäßen Mischungen aus den Lösungen L1 und L2

Die Lösungen L1 und L2 wurden in den in Tabelle 1 dargestellten Verhältnissen unter Rühren bei 23°C gemischt.

| **Mischung** | **Gew.-Teile L1** | **Gew.-Teile L2** | **Viskosität mPas bei 25°C** |
|---|---|---|---|
| M1 | 99 | 1 | 2200 |
| M2 | 95 | 5 | 635 |
| M3 | 90 | 10 | 430 |
| M4 | 80 | 20 | 315 |
| | 100 | - | 8200 |
| | - | 100 | 9400 |

## Patentansprüche

1. Mischung aus einer Lösung L1 einer oder mehrerer Polyamidocarbonsäuren und einer Lösung L2, enthaltend ein oder mehrere Diamine und ein oder mehrere Tetracarbonsäurediester.

2. Mischung nach Anspruch 1,
dadurch gekennzeichnet, daß die Mischung 80 bis 99,9 Gew.-% der Lösung L1, bezogen auf die Mischung, und 0,1 bis 20 Gew.-% der Lösung L2, bezogen auf die Mischung, enthält.

3. Mischung nach Anspruch 1 oder 2,
dadurch gekennzeichnet, daß die Tetracarbonsäurediester der Lösung L2 mindestens 2 Mol-%, bezogen auf alle Estergruppen, Estergruppen enthalten, die sich von Alkoholen der allgemeinen Formel
HO-Z-O-X (I)
oder
HO-Z-X (II)
herleiten, worin Z für einen geradlinigen oder verzweigten aliphatischen Rest mit 1 bis 15, bevorzugt 1 bis 8, Kohlenstoffatomen, welcher durch 1 bis 4, bevorzugt 1 bis 2 Ethergruppen -O-unterbrochen sein kann und X für einen aromatischen Rest aus 5 bis 20 Kohlenstoffatomen, welcher auch N, O oder S als Heteroatome im aromatischen Ringsystem enthalten kann, steht.

4. Mischung nach einem der Ansprüche 1 bis 3,
dadurch gekennzeichnet, daß die Tetracarbonsäurediester der Lösung L2 ein Gemisch aus 0,05 bis 0,95 Mol-% Oxydiphthalsäurediester und aus 0,05 bis 0,95 Mol-% Benzophenontetracarbonsäurediester und/oder Biphenyltetracarbonsäurediester darstellen.

5. Verfahren zur Herstellung von Überzügen aus Polyimid auf Substraten,
dadurch gekennzeichnet, daß die Mischungen nach einem der Ansprüche 1 bis 4 auf das Substrat aufgetragen werden und anschließend bei Endtemperaturen von 150 bis 450°C gehärtet werden.

6. Verfahren gemäß Anspruch 5,
dadurch gekennzeichnet, daß der Härtungsprozeß mehrstufig durch stufenweises Erhöhen der Temperatur bis zur Endtemperatur durchgeführt wird.

7. Verwendung der Mischungen nach einem der Ansprüche 1 bis 4 zur Herstellung von Überzügen aus Polyimid.

8. Mit einem Polyimid beschichteter Gegenstand, erhältlich unter Verwendung der Mischungen nach einem der Ansprüche 1 bis 4.
